# EUROPÄISCHE PATENTANMELDUNG

(11) **EP 1 705 793 A2**
(43) Veröffentlichungstag der Anmeldung: **27.09.2006**
(21) Anmeldenummer: 06000278.9
(22) Anmeldetag: 09.01.2006
(51) Int. Cl.: H02P 9/00, H02J 3/38

(54) **Elektrische Anlage zur Abgabe von Energie an ein elektrisches Netz sowie Verfahren zu dessen Betrieb**

(30) Priorität: 19.03.2005 DE 102005012762
(71) Anmelder: ALSTOM, 92300 Levallois-Perret (FR)
(72) Erfinder: Bocquel, Aurélie, 10823 Berlin (DE); Janning, Jörg, Dr., 12049 Berlin (DE)
(74) Vertreter: Schäfer, Wolfgang

(57) **Zusammenfassung**

Es wird eine elektrische Anlage (10) zur Abgabe von Energie an ein elektrisches Netz (11) beschrieben. Die Anlage (10) ist mit einer doppeltgespeisten Asynchronmaschine (13) versehen, die mit einem Umrichter (21) gekoppelt ist. Ein Widerstand (25) ist in dem Rotorstromkreis der Asynchronmaschine (13) vorgesehen, der vor einem Kurzschluss in dem Netz (11) einen ersten Wert (R1) aufweist, und der nach einem Kurzschluss in dem Netz (11) einen zweiten Wert (R2) aufweist.

## Beschreibung

Die Erfindung betrifft eine elektrische Anlage zur Abgabe von Energie an ein elektrisches Netz, mit einer doppeltgespeisten Asynchronmaschine, die mit einem Umrichter gekoppelt ist. Die Erfindung betrifft ebenfalls ein Verfahren zum Betreiben einer elektrischen Anlage zur Abgabe von Energie an ein elektrisches Netz.

Derartige Energieerzeugungseinrichtungen sowie deren Betrieb sind allgemein bekannt. Ebenfalls ist bekannt, dass derartige Energieerzeugungseinrichtungen in der Lage sein müssen, alle Arten eines Kurzschlusses in dem angeschlossenen Netz zu verarbeiten, ohne dass dies zu längeren Unterbrechungen der Energieabgabe an das Netz führt.

Aufgabe der Erfindung ist es, eine Anlage sowie ein Verfahren der eingangs genannten Art zu schaffen, mit dem einerseits die Unterbrechung der Energieabgabe an das Netz vermindert wird, ohne dass dies den sicheren Betrieb der Anlage gefährdet.

Diese Aufgabe wird erfindungsgemäß durch die Anlage nach Anspruch 1 sowie durch das Verfahren nach Anspruch 13 gelöst.

Erfindungsgemäß wird ein veränderlicher Widerstand in den Rotorstromkreis eingefügt. Im Normalbetrieb der Anlage weist der Widerstand einen ersten Wert, insbesondere etwa 0 Ohm auf. Damit kann die Anlage in bekannter Weise Energie erzeugen und an das Netz abgeben. Nach einem Kurzschluss weist der Widerstand jedoch einen zweiten Wert auf, der ungleich von 0 Ohm ist. Damit werden die Rotorströme und die Statorströme begrenzt. Eine Schädigung von Bauteilen der Anlage wird damit sicher vermieden. Ebenfalls wird dadurch erreicht, dass die Anlage schnell wieder in den Normalbetrieb übergehen und damit wieder Energie an das Netz abgeben kann.

Bei einer vorteilhaften Weiterbildung der Erfindung weist die Asynchronmaschine einen Rotor mit einer Wicklung auf, wobei die Wicklung über den Widerstand mit dem Umrichter verbunden ist. Dabei kann der Widerstand insbesondere mit einer Drossel des Umrichters verbunden sein.

Besonders vorteilhaft ist es, wenn der Wert des Widerstands variabel veränderlich ist. Insbesondere kann der Wert des Widerstands als eine Funktion der Zeit veränderbar sein.

Vorzugsweise kann der Widerstand nach dem Kurzschluss in dem Netz zuerst den zweiten Wert und danach einen dritten Wert aufweisen. Damit kann erreicht werden, dass die Rotorströme und die Statorströme zumindest noch in der Lage sind, ein derartiges Drehmoment zu erzeugen, das ein Ansteigen der Drehzahl der Asynchronmaschine verhindert. Die Drehzahl kann auf diese Weise in einem Bereich gehalten werden, der für den Umrichter noch zulässig ist.

Bei einer vorteilhaften Ausgestaltung der Erfindung ist der Widerstand zwischen einem Kurzschließer und der Asynchronmaschine angeordnet. Bei einer alternativen Ausgestaltung ist der Widerstand zwischen dem Kurzschließer und dem Umrichter angeordnet.

Die genannte Aufgabe wird erfindungsgemäß auch durch die Anlage nach Anspruch 21 sowie durch das Verfahren nach Anspruch 24 gelöst.

Erfindungsgemäß ist in diesem Fall ein Statorschalter in dem Statorstromkreis der Asynchronmaschine vorgesehen, der nach einem Kurzschluss in dem Netz geöffnet wird. Besonders vorteilhaft ist es dabei, wenn der Statorschalter zwischen dem Stator der Asynchronmaschine und dem Netz angeordnet ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

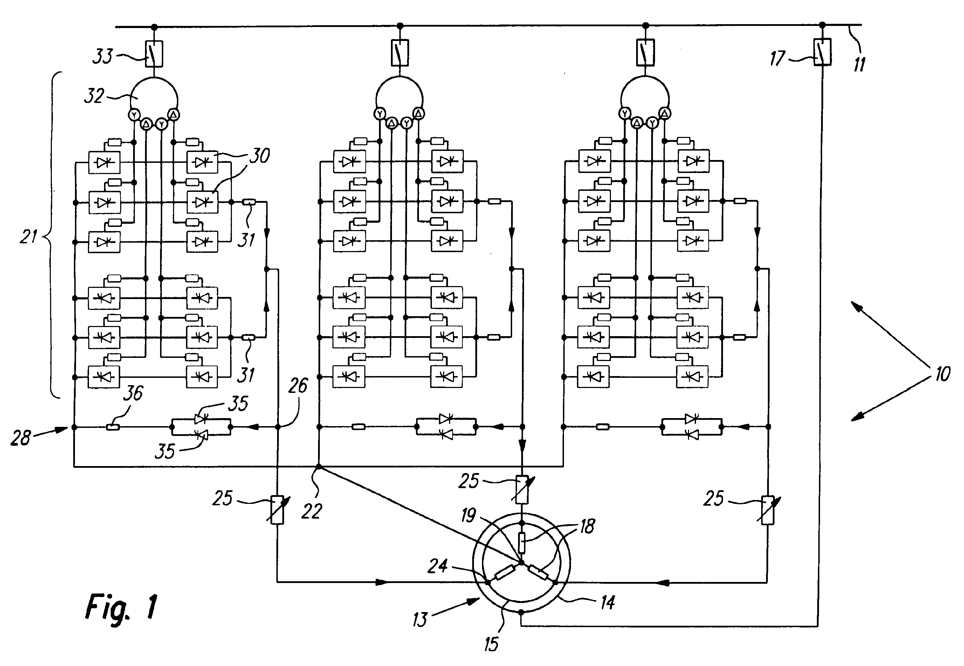

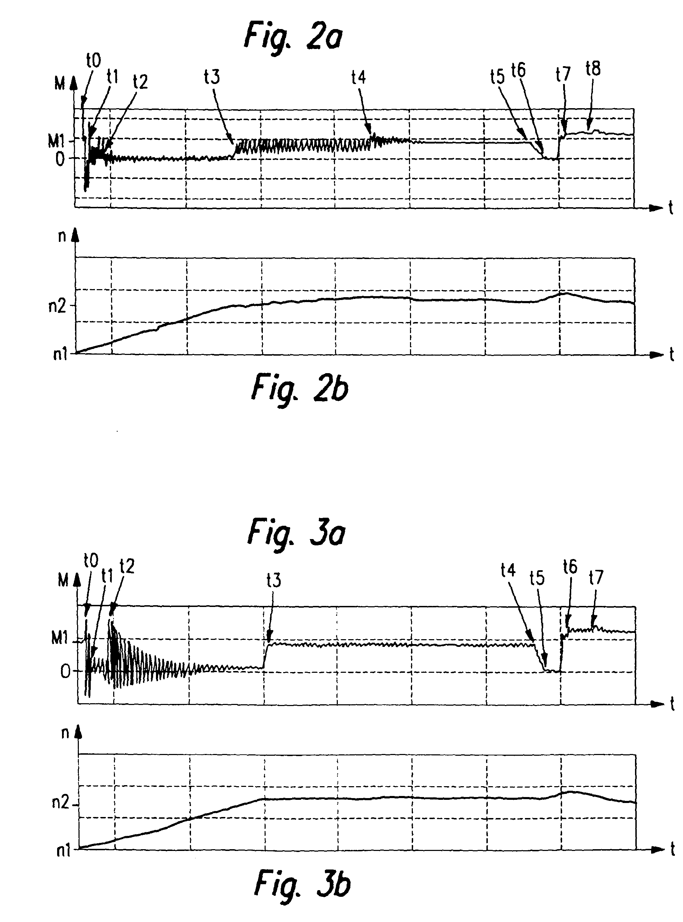

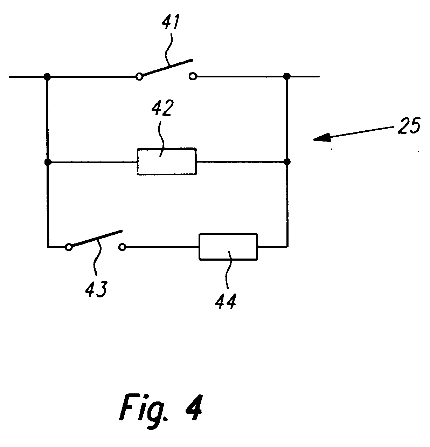

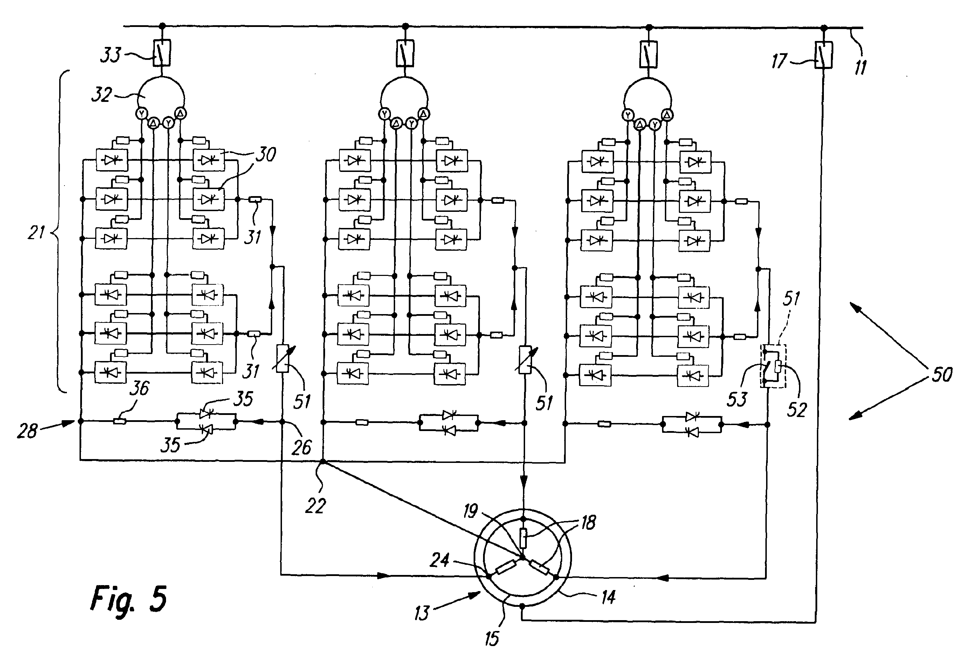

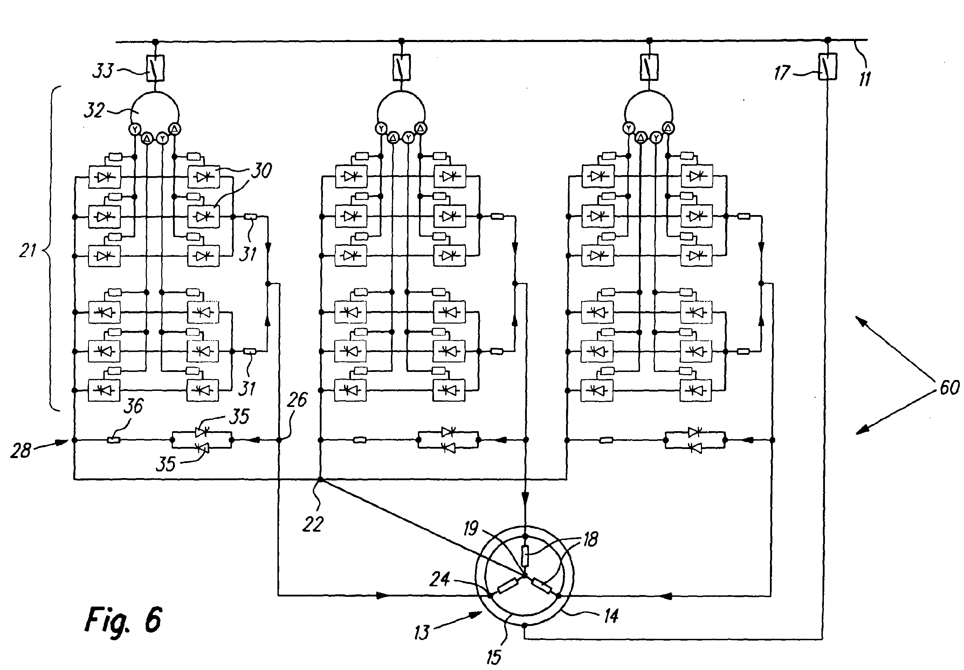

Figur 1 zeigt ein schematisches Schaltbild eines ersten Ausführungsbeispiels einer erfindungsgemäßen elektrischen Anlage zur Abgabe von Energie an ein elektrisches Netz, Figuren 2a und 2b zeigen schematische Zeitdiagramme für den Fall eines einpoligen Kurzschlusses im Netz, Figuren 3a und 3b zeigen schematische Zeitdiagramme für den Fall eines dreipoligen Kurzschlusses im Netz, Figur 4 zeigt ein schematisches Schaltbild einer Ausführungsform eines veränderlichen Widerstands der Anlage der Figur 1, Figur 5 zeigt ein schematisches Schaltbild eines zweiten Ausführungsbeispiels einer erfindungsgemäßen elektrischen Anlage zur Abgabe von Energie an ein elektrisches Netz, und Figur 6 zeigt ein schematisches Schaltbild eines dritten Ausführungsbeispiels einer erfindungsgemäßen elektrischen Anlage zur Abgabe von Energie an ein elektrisches Netz.

In der Figur 1 ist eine elektrische Anlage 10 dargestellt, die zur Lieferung von Energie an ein dreipoliges, elektrisches Netz 11 geeignet ist. Die Anlage 10 kann beispielsweise im Rahmen eines Wasserkraftwerks oder eines Pumpspeicherwerks oder einer Windkraftanlage oder einer sonstigen Energieerzeugungseinrichtung vorhanden sein. Bei dem Netz 11 kann es sich beispielsweise um das allgemeine Energieversorgungsnetz handeln, über das Industrie und Haushalte mit elektrischer Energie versorgt werden.

Die Anlage 10 weist eine doppeltgespeiste Asynchronmaschine 13 mit einem Stator 14 und einem Rotor 15 auf. Der Rotor 15 kann, wie bereits angedeutet wurde, durch Wasserenergie oder Windenergie oder auf sonstige Weise angetrieben werden.

Der Stator 14 ist dreipolig über jeweils einen Statorschalter 17 mit dem Netz 11 verbunden. Im Normalbetrieb der Anlage 10 sind die Statorschalter 17 geschlossen.

Der Rotor 15 weist drei Wicklungen 18 auf, die sternförmig miteinander verbunden sind. Jeder der drei Wicklungen 18 ist ein Umrichter 21 zugeordnet. Der gemeinsame Anschlusspunkt 19 der drei Wicklungen 18 ist mit einem gemeinsamen Anschlusspunkt 22 der drei Umrichter 21 verbunden.

Die drei Umrichter 21 können insbesondere als Direktumrichter ausgebildet sein. Es ist aber auch möglich, dass Pulswechselrichter mit einem Gleichspannungszwischenkreis oder sogenannte I-Umrichter mit einem Stromzwischenkreis oder ähnliche Ausführungsformen von Umrichtern zur Anwendung kommen.

Die drei Umrichter 21 sind gleichartig ausgebildet. Nachfolgend wird nur einer der drei Umrichter 21 und dessen Verbindungen mit dem Rotor 15 der Asynchronmaschine 13 näher erläutert. Diese Beschreibung gilt entsprechend auch für die anderen beiden Umrichter 21.

Der freie Anschlusspunkt 24 jeder der drei Wicklungen 18 des Rotors 15 ist über einen veränderlichen Widerstand 25 mit einem Anschlusspunkt 26 verbunden, an den einerseits der zugehörige Umrichters 21 angeschlossen ist. Andererseits ist dieser Anschlusspunkt 26 über einen Kurzschließer 28 mit dem gemeinsamen Anschlusspunkt 22 verbunden.

Der veränderliche Widerstand 25 kann auf beliebige Weisen realisiert sein. So ist es möglich, dass der veränderliche Widerstand 25 variabel und/oder kontinuierlich beliebige Widerstandswerte einnehmen kann. Insbesondere kann der Widerstandswert des veränderlichen Widerstands 25 als Funktion der Zeit veränderbar sein. Ebenfalls ist es möglich, dass der veränderliche Widerstand 25 zwei oder mehrere diskrete Widerstandswerte einnehmen kann. Unabhängig von der Realisierung des veränderlichen Widerstands 25 ist es möglich, dass dessen Widerstandswerte von einer Steuerung oder Regelung eingestellt werden. Die einzustellenden Widerstandswerte können dann von der Steuerung oder Regelung gegebenenfalls auch in Abhängigkeit von sonstigen Parametern verändert werden.

Im vorliegenden Ausführungsbeispiel ist der veränderliche Widerstand 25 beispielhaft derart ausgebildet, dass er zumindest drei Werte einnehmen kann, und zwar einen ersten Wert R1, der etwa 0 Ohm und damit im wesentlichen einem Kurzschluss entspricht, einen zweiten Wert R2, der wenigen Ohm entspricht, und einen dritten Wert R3, der größer ist als der erste Wert, aber kleiner als der zweite Wert. Beispielhaft kann der erste Wert R1 exakt 0 Ohm sein, der zweite Wert R2 etwa 1 Ohm und der dritte Wert etwa 0,1 Ohm. Im Normalbetrieb der Anlage 10 weist der veränderliche Widerstand 25 den ersten Wert R1 auf.

Der Umrichter 21 weist steuerbare Schalteinrichtungen 30 sowie Drosseln 31 auf, die in bekannter Weise miteinander verschaltet sind. Die Drosseln 31 sind dabei mit dem Anschlusspunkt 26 verbunden. Bei entsprechenden Ausführungsformen der Umrichter 21 ist es möglich, dass die Drosseln 31 nicht vorhanden sind. Ebenfalls ist es in Abhängigkeit von der Ausgestaltung der Umrichter 21 möglich, dass deren Verbindung mit der Asynchronmaschine 13 andersartig ausgebildet ist.

Die Steuerung der Schalteinrichtungen 30 erfolgt ebenfalls in bekannter Weise über eine Schaltung 32, die über einen Schalter 33 mit dem Netz 11 gekoppelt ist. Im Normalbetrieb der Anlage 10 ist der Schalter 33 geschlossen.

Der Kurzschließer 28 besteht im vorliegenden Ausführungsbeispiel aus zwei gegensinnig geschalteten steuerbaren Schalteinrichtungen 35 und einem in Serie geschalteten Widerstand 36. Alternativ ist es möglich, dass der Kurzschließer 28 aus einer Diodenbrücke mit einem über z.B. einen Thyristor geschalteten Widerstand oder aus einer Thyristorbrücke mit einem zugehörigen Widerstand besteht. Andere Ausführungsformen des Kurzschließers 28 sind ebenfalls möglich. Wesentlich ist dabei, dass der Kurzschließer 28 für die Abschaltung eines Kurzschlusses des Rotors 15 über einen Widerstand geeignet ist.

Im Normalbetrieb der Anlage 10 ist der Kurzschließer 28 geöffnet, die Schalteinrichtungen 35 sind also in ihren nichtleitenden Zustand geschaltet.

Im Normalbetrieb der Anlage 10 fließen Rotorströme in Rotorstromkreisen, und zwar unter anderem über die veränderlichen Widerstände 25. Weiterhin fließen Statorströme über die Statorschalter 17.

Anhand der Figuren 2a und 2b wird nachfolgend ein Verfahren erläutert, das im Falle eines einpoligen Kurzschlusses im Netz 11 ausgeführt wird. In der Figur 2a ist das zu der Asynchronmaschine 13 zugehörige Drehmoment M über der Zeit t aufgetragen und in der Figur 2b ist die Drehzahl n der Asynchronmaschine 13 über der Zeit t aufgetragen.

In der Figur 2a wird davon ausgegangen, dass vor einem Zeitpunkt t0 ein Normalbetrieb der Anlage 10 vorliegt. Wie erläutert wurde, sind im Normalbetrieb insbesondere die Kurzschließer 28 geöffnet und die veränderlichen Widerstände 25 weisen den ersten Wert R1 von etwa 0 Ohm auf. Weiterhin werden die Schalteinrichtungen 30 der Umrichter 21 derart angesteuert, dass Energie in das Netz 11 eingespeist wird. Die Asynchronmaschine 13 weist ein Drehmoment M1 und eine Drehzahl n1 auf.

In dem Zeitpunkt t0 tritt ein einpoliger Kurzschluss im Netz 11 auf.

Dies hat zur Folge, dass die Kurzschließer 28 geschlossen werden und die Ansteuerung der Umrichter 21 gesperrt wird. Diese Maßnahmen erfolgen mit einer möglichst geringen Verzögerung nach dem Zeitpunkt t0. Durch diese Maßnahmen werden die Umrichter 21 vor Überspannungen und Überströmen geschützt. Unabhängig davon steigen die von der Asynchronmaschine 13 abgegebenen Rotorströme und Statorströme an.

Weiterhin hat der Kurzschluss im Netz 11 zur Folge, dass die veränderlichen Widerstände 25 auf ihre zweiten Werte R2 eingestellt werden. Da dieser Vorgang eine endliche Zeitdauer erfordert, ist der zweite Wert R2 erst im Zeitpunkt t1 vorhanden. Die genannte Zeitdauer kann beispielsweise 40 msec betragen. Der Wert R2 kann vorab in Abhängigkeit von sonstigen Parametern ermittelt und dann variabel eingestellt werden. Durch die Einstellung der veränderlichen Widerstände 25 auf den zweiten Wert R2 werden die über die Widerstände 25 fließenden Rotorströme begrenzt. Dies bewirkt weiterhin eine Begrenzung der über die Statorschalter 17 fließenden Statorströme.

In einem Zeitpunkt t2 ist der Kurzschluss im Netz 11 behoben. Die Zeitdauer bis zu dieser Rückkehr des Netzes 11 kann ab dem Zeitpunkt t0 beispielsweise 150 msec betragen. Es wird nunmehr ab dem Zeitpunkt t2 die sogenannte Automatische Wiedereinschaltung AWE gestartet, die beispielsweise eine Zeitdauer von 1,8 sec andauert.

Von dem Zeitpunkt t0 bis zu dem Zeitpunkt t2 können die Rotorströme und die Statorströme aufgrund von nicht beschriebenen Kompensationschaltungen zu Schwingungen angeregt werden, was auch zu Schwingungen des Drehmoments M führen kann. Diese Schwingungen sind jedoch unkritisch und werden deshalb nicht näher betrachtet.

Nach dem Zeitpunkt t2 und damit am Anfang der Automatischen Wiedereinschaltung AWE beruhigen sich die Schwingungen der Rotorströme und der Statorströme und werden mit der Zeit etwa symmetrisch. Dies führt zu etwa symmetrischen Schwingungen des Drehmoments M um die Nulllinie. Dies kann gegebenenfalls durch eine gesteuerte und/oder geregelte Veränderung des Werts R2 der Widerstände 25 unterstützt werden.

Nach dem Erreichen dieser Symmetrie werden in einem Zeitpunkt t3 die veränderlichen Widerstände 25 auf ihre dritten Werte R3 eingestellt. Wie erläutert wurde, ist dieser dritte Wert R3 kleiner als der zweite Wert R2. Der Wert R3 kann wiederum vorab in Abhängigkeit von sonstigen Parametern ermittelt und variabel eingestellt werden. Damit wird die nach dem Zeitpunkt t1 erfolgende Begrenzung der Rotorströme und der Statorströme zumindest teilweise zurückgenommen. Dies hat zur Folge, dass nach dem Zeitpunkt t3 sich etwa das Drehmoment M1 ausbildet, das größer als Null ist, und das auf die Asynchronmaschine 13 einwirkt.

Hierzu ist auf die Figur 2b zu verweisen, aus der hervorgeht, dass die Drehzahl n der Asynchronmaschine 13 ab dem Zeitpunkt t1 von der Drehzahl n1 fortlaufend ansteigt. Dieser Drehzahlanstieg ergibt sich daraus, dass nach dem Zeitpunkt t1 aufgrund der Begrenzung der Rotorströme und der Statorströme kein wesentliches Drehmoment mehr auf die Asynchronmaschine 13 eingewirkt hat. Erst das nach dem Zeitpunkt t3 vorhandene Drehmoment M1 hat zur Folge, dass der Drehzahlanstieg beendet wird und sich eine etwa konstante Drehzahl n2 einstellt.

Der dritte Wert R3 der veränderlichen Widerstände 25 wird derart gewählt, dass sich über die Rotorströme und die Statorströme sowie über das Drehmoment M1 die Drehzahl n2 der Asynchronmaschine 13 derart einstellt, dass sich diese Drehzahl n2 in einem für die Umrichter 21 zulässigen Bereich befindet. Der dritte Wert R3 wird also insbesondere derart gewählt, dass die Drehzahl n der Asynchronmaschine 13 nicht weiter ansteigt. Eine Rückführung der Asynchronmaschine 13 in den für die Umrichter 21 zulässigen Drehzahlbereich beispielsweise durch ein mechanisches Abbremsen der Asynchronmaschine 13 ist damit nicht erforderlich.

Die Automatische Wiedereinschaltung AWE des Netzes 11 ist in einem Zeitpunkt t4 abgeschlossen. Dies führt zu einer Symmetrierung der Rotorströme und der Statorströme und damit zu einer Stabilisierung des Drehmoments M der Asynchronmaschine 13 nach diesem Zeitpunkt t4. Es wird hierzu auf die Figur 2a und die dort dargestellten abklingenden Schwingungen des Drehmoments M verwiesen.

In einem Zeitpunkt t5 werden die Kurzschließer 28 wieder geöffnet. Dies hat zur Folge, dass das Drehmoment M gemäß der Figur 2a auf Null absinkt. Entsprechend gehen auch die Rotorströme gegen Null.

Sobald in einem Zeitpunkt t6 die Rotorströme Null geworden sind, werden die Schalteinrichtungen 30 der Umrichter 21 in einem Zeitpunkt t7 wieder angesteuert. Dies kann zu einem geringen Anstieg der Drehzahl n der Asynchronmaschine 13 führen, der jedoch unkritisch ist. Dies hat zur Folge, dass das Drehmoment M gemäß der Figur 2a wieder ansteigt und damit die Drehzahl der Asynchronmaschine 13 wieder begrenzt wird.

In einem Zeitpunkt t8, der beispielsweise etwa 10 msec nach dem Zeitpunkt t7 vorgesehen ist, werden die veränderlichen Widerstände 25 wieder auf ihren ersten Wert R1 eingestellt, also etwa auf 0 Ohm.

Es ist nunmehr wieder der Normalbetrieb der Anlage 10 erreicht. Die Kurzschließer 28 sind geöffnet und die veränderlichen Widerstände 25 weisen den ersten Wert R1 von etwa 0 Ohm auf. Weiterhin werden die Schalteinrichtungen 30 der Umrichter 21 derart angesteuert, dass Energie in das Netz 11 eingespeist wird. Die Asynchronmaschine 13 weist das Drehmoment M1 und eine Drehzahl n2 auf. Die Drehzahl n2 ist dabei gemäß der Figur 2b größer als die Drehzahl n1, kann jedoch durch eine entsprechende Ansteuerung der Umrichter 21 in bekannter Weise auf die Drehzahl n1 zurückgeführt werden, wie dies in der Figur 2b durch eine fallende Drehzahlkurve angedeutet ist.

Anhand der Figuren 3a und 3b wird nachfolgend ein Verfahren erläutert, das im Falle eines dreipoligen Kurzschlusses im Netz 11 ausgeführt wird. In der Figur 3a ist das zu der Asynchronmaschine 13 zugehörige Drehmoment M über der Zeit t aufgetragen und in der Figur 3b ist die Drehzahl n der Asynchronmaschine 13 über der Zeit t aufgetragen.

In der Figur 3a wird davon ausgegangen, dass vor einem Zeitpunkt t0 ein Normalbetrieb der Anlage 10 vorliegt. Wie erläutert wurde, sind im Normalbetrieb insbesondere die Kurzschließer 28 geöffnet und die veränderlichen Widerstände 25 weisen den ersten Wert R1 von etwa 0 Ohm auf. Weiterhin werden die Schalteinrichtungen 30 der Umrichter 21 derart angesteuert, dass Energie in das Netz 11 eingespeist wird. Die Asynchronmaschine 13 weist ein Drehmoment M1 und eine Drehzahl n1 auf.

In dem Zeitpunkt t0 tritt ein dreipoliger Kurzschluss im Netz 11 auf.

Dies hat zur Folge, dass die Kurzschließer 28 geschlossen werden und die Ansteuerung der Umrichter 21 gesperrt wird. Diese Maßnahmen erfolgen mit einer möglichst geringen Verzögerung nach dem Zeitpunkt t0. Durch diese Maßnahmen werden die Umrichter 21 vor Überspannungen und Überströmen geschützt. Unabhängig davon steigen die von der Asynchronmaschine 13 abgegebenen Rotorströme und Statorströme an.

Weiterhin hat der Kurzschluss im Netz 11 zur Folge, dass die veränderlichen Widerstände 25 auf ihre zweiten Werte R2 eingestellt werden. Da dieser Vorgang eine endliche Zeitdauer erfordert, ist der zweite Wert R2 erst im Zeitpunkt t1 vorhanden. Die genannte Zeitdauer kann beispielsweise 40 msec betragen. Der Wert R2 kann vorab in Abhängigkeit von sonstigen Parametern ermittelt und variabel eingestellt werden. Durch die Einstellung der veränderlichen Widerstände 25 auf den zweiten Wert R2 werden die über die Widerstände 25 fließenden Rotorströme begrenzt. Dies bewirkt weiterhin eine Begrenzung der über die Statorschalter 17 fließenden Statorströme.

In einem Zeitpunkt t2 ist der Kurzschluss im Netz 11 behoben. Die Zeitdauer bis zu dieser Rückkehr des Netzes 11 kann ab dem Zeitpunkt t0 beispielsweise 150 msec betragen.

Von dem Zeitpunkt t0 bis zu dem Zeitpunkt t2 können die Rotorströme und die Statorströme aufgrund von nicht beschriebenen Kompensationsschaltungen zu Schwingungen angeregt werden, was auch zu Schwingungen des Drehmoments M führen kann. Diese Schwingungen können sich nach der Wiederherstellung des Netzes 11 kurzfristig sogar noch verstärken.

Nach dem Zeitpunkt t2 sind diese Schwingungen der Rotorströme und der Statorströme jedoch rückläufig und werden mit der Zeit etwa symmetrisch. Dies führt zu etwa symmetrischen Schwingungen des Drehmoments M um die Nulllinie, wie dies in der Figur 3a dargestellt ist.

Nach dem Erreichen dieser Symmetrie werden in einem Zeitpunkt t3 die veränderlichen Widerstände 25 auf ihre dritten Werte R3 eingestellt. Wie erläutert wurde, ist dieser dritte Wert R3 kleiner als der zweite Wert R2. Der Wert R3 kann wiederum vorab in Abhängigkeit von sonstigen Parametern ermittelt und variabel eingestellt werden. Damit wird die nach dem Zeitpunkt t1 erfolgende Begrenzung der Rotorströme und der Statorströme zumindest teilweise zurückgenommen. Dies hat zur Folge, dass nach dem Zeitpunkt t3 sich das Drehmoment M1 ausbildet, das größer als Null ist, und das auf die Asynchronmaschine 13 einwirkt.

Hierzu ist auf die Figur 3b zu verweisen, aus der hervorgeht, dass die Drehzahl n der Asynchronmaschine 13 ab dem Zeitpunkt t1 von einer Nenndrehzahl n1 fortlaufend ansteigt. Dieser Drehzahlanstieg ergibt sich daraus, dass nach dem Zeitpunkt t1 aufgrund der Begrenzung der Rotorströme und der Statorströme kein wesentliches Drehmoment mehr auf die Asynchronmaschine 13 eingewirkt hat. Erst das nach dem Zeitpunkt t3 vorhandene Drehmoment M1 hat zur Folge, dass der Drehzahlanstieg beendet wird und sich eine etwa konstante Drehzahl n2 einstellt.

Der dritte Wert R3 der veränderlichen Widerstände 25 wird derart gewählt, dass sich über die Rotorströme und die Statorströme sowie über das Drehmoment M1 die Drehzahl n2 der Asynchronmaschine 13 derart einstellt, dass sich diese Drehzahl n2 in einem für die Umrichter 21 zulässigen Bereich befindet. Der dritte Wert R3 wird also insbesondere derart gewählt, dass die Drehzahl n der Asynchronmaschine 13 nicht weiter ansteigt. Eine Rückführung der Asynchronmaschine 13 in den für die Umrichter 21 zulässigen Drehzahlbereich beispielsweise durch ein mechanisches Abbremsen der Asynchronmaschine 13 ist damit nicht erforderlich.

In einem Zeitpunkt t4 werden die Kurzschließer 28 wieder geöffnet. Dies hat zur Folge, dass das Drehmoment M gemäß der Figur 3a auf Null absinkt. Entsprechend gehen auch die Rotorströme gegen Null.

Sobald in einem Zeitpunkt t5 die Rotorströme Null geworden sind, werden die Schalteinrichtungen 30 der Umrichter 21 in einem Zeitpunkt t6 wieder angesteuert. Dies kann zu einem geringen Anstieg der Drehzahl n der Asynchronmaschine 13 führen, der jedoch unkritisch ist. Dies hat zur Folge, dass das Drehmoment M wieder ansteigt und damit die Drehzahl der Asynchronmaschine 13 wieder begrenzt wird.

In einem Zeitpunkt t7, der beispielsweise etwa 10 msec nach dem Zeitpunkt t6 vorgesehen ist, werden die veränderlichen Widerstände 25 wieder auf ihren ersten Wert R1 eingestellt, also etwa auf 0 Ohm.

Es ist nunmehr wieder der Normalbetrieb der Anlage 10 erreicht. Die Kurzschließer 28 sind geöffnet und die veränderlichen Widerstände 25 weisen den ersten Wert R1 von etwa 0 Ohm auf. Weiterhin werden die Schalteinrichtungen 30 der Umrichter 21 derart angesteuert, dass Energie in das Netz 11 eingespeist wird. Die Asynchronmaschine 13 weist das Drehmoment M1 und eine Drehzahl n2 auf. Die Drehzahl n2 ist dabei gemäß der Figur 3b größer als die Drehzahl n1, kann jedoch durch eine entsprechende Ansteuerung der Umrichter 21 in bekannter Weise auf die Drehzahl n1 zurückgeführt werden, wie dies in der Figur 3b durch eine fallende Drehzahlkurve angedeutet ist.

In der Figur 4 ist ein Ausführungsbeispiel des veränderlichen Widerstands 25 dargestellt. Es wird nochmals darauf hingewiesen, dass der veränderliche Widerstand 25 beliebig realisiert sein kann und insbesondere völlig variabel verstellbar sein kann.

Gemäß der Figur 4 ist der veränderliche Widerstand 25 aus einer Parallelschaltung eines ersten Schalters 41, eines ersten Widerstands 42 und einer Serienschaltung aus einem zweiten Schalter 43 und einem zweiten Widerstand 44 aufgebaut.

Damit der veränderliche Widerstand 25 seinen ersten Wert R1 von etwa 0 Ohm einnimmt, wird der erste Schalter 41 geschlossen. Die Stellung des zweiten Schalters 43 ist unerheblich, vorzugsweise ist dieser Schalter 43 geöffnet. Der veränderliche Widerstand 25 stellt damit in diesem Zustand aufgrund des geschlossenen Schalters 41 im wesentlichen einen Kurzschluss dar.

Damit der veränderliche Widerstand 25 seinen zweiten Wert R2 einnimmt, wird der erste Schalter 41 geöffnet. Sofern der zweite Schalter 43 nicht bereits geöffnet ist, wird er geöffnet. Der veränderliche Widerstand 25 wird damit in diesem Zustand von dem ersten Widerstand 42 gebildet.

Damit der veränderliche Widerstand 25 seinen dritten Wert R3 einnimmt, wird der zweite Schalter 43 geschlossen. Sofern der erste Schalter 41 nicht bereits geöffnet ist, wird er geöffnet. Der veränderliche Widerstand 25 wird damit in diesem Zustand von der Parallelschaltung aus den Widerständen 42, 44 gebildet.

Bei den vorstehend anhand der Figuren 2a, 2b, 3a, 3b beschriebenen Verfahren nehmen die veränderlichen Widerstände 25 aufeinanderfolgend die Werte R1, R2, R3 und wieder R1 ein. Dieser Ablauf wird bei der Ausführungsform der Figur 4 dadurch erreicht, dass zuerst der erste Schalter 41 geschlossen und der zweite Schalter 43 geöffnet ist, dass dann der erste Schalter 41 geöffnet wird, dass dann der zweite Schalter 43 geschlossen wird, und dass schließlich der erste Schalter 41 geschlossen und der zweite Schalter 43 geöffnet wird. Bei dem letzten Übergang, der das Umschalten beider Schalter 41, 43 erfordert, ist es möglich, dass der zweite Schalter 43 erst nach dem Schließen des ersten Schalters 41 geöffnet wird.

In der Figur 5 ist eine elektrische Anlage 50 dargestellt, die zur Lieferung von Energie an das dreipolige, elektrische Netz 11 geeignet ist.

Der Aufbau der Anlage 50 der Figur 5 entspricht weitgehend dem Aufbau der Anlage 10 der Figur 1. Gleiche Merkmale sind deshalb mit gleichen Bezugszeichen versehen. Insoweit wird auf die Erläuterungen zu dem Aufbau und der Funktionsweise der Anlage 10 der Figur 1 verwiesen.

Nachfolgend werden nur diejenigen Merkmale erläutert, durch die sich die Anlage 50 der Figur 5 von der Anlage 10 der Figur 1 unterscheidet.

Der veränderliche Widerstand 25 der Anlage 10 der Figur 1 ist in der Anlage 50 der Figur 5 nicht vorhanden. Statt dessen ist bei der Anlage 50 der Figur 5 ein veränderlicher Widerstand 51 vorhanden, der zwischen dem Anschlusspunkt 26 und den Drosseln 31 des Umrichters 21 angeordnet ist. Für die Realisierung des veränderlichen Widerstands 51 wird auf die Erläuterungen des veränderlichen Widerstands 25 verwiesen. Es wird darauf hingewiesen, dass der veränderliche Widerstand 51 beliebig realisiert sein kann und insbesondere völlig variabel verstellbar sein kann.

Der vorstehend genannte veränderliche Widerstand 51 ist im rechten Zweig der Figur 5 beispielhaft als eine Parallelschaltung aus einem Widerstand 52 und einem Schalter 53 dargestellt. Damit kann der veränderliche Widerstand 51 zwei Werte einnehmen, und zwar einen ersten Wert R1 bei geschlossenem Schalter 53, der etwa 0 Ohm und damit im wesentlichen einem Kurzschluss entspricht, sowie einen zweiten Wert R2 bei geöffnetem Schalter 53, der dem Wert des Widerstands 53 entspricht.

Es versteht sich, dass der beschriebene veränderliche Widerstand 51 jedem der drei Umrichter 21 zugeordnet und damit dreifach vorhanden ist.

Die Funktionsweise der Anlage 50 der Figur 5 stimmt im wesentlichen mit der Funktionsweise der Anlage 10 der Figur 1 überein. Die Funktionsweise ist nachfolgend deshalb nur verkürzt erläutert.

Nach einem Kurzschluss im Netz 11 und nach einem Schließen des Kurzschließers 28 wird der Schalter 53 geöffnet, so dass der Widerstand 52 zur Wirkung kommt. Unmittelbar danach wird der Kurzschließer 28 wieder geöffnet. Dies hat zur Folge, dass der Kurzschluss über den veränderlichen Widerstand 51 und den jeweiligen Umrichter 21 geführt ist.

Mit Hilfe des Widerstands 52 wird der Umrichterstrom begrenzt und eine Drehmomentabgabe der Asyncronmaschine 13 ermöglicht. Dadurch wird die Asynchronmaschine 13 gebremst und es wird Wirkleistung in das Netz 11 eingespeist. Weiterhin wird durch den Widerstand 52 eine Stabilisierung des Netzes 11 erreicht, was durch eine gesteuerte und/oder geregelte Veränderung des Widerstands 52 noch unterstützt werden kann. Der Kurzschließer 28 bleibt dabei geöffnet.

Danach kann der Widerstand 52 gegebenenfalls in Richtung zu einem kleineren Wert verändert werden, so dass alsbald in einen geregelten Betrieb der Umrichter 21 wieder übergegangen werden kann. Ist dies erreicht, wird der Schalter 53 wieder geschlossen.

Die im Zusammenhang mit den Figuren 2a, 2b, 3a, 3b erläuterte Umschaltung des veränderlichen Widerstands 25 der Figur 1 in einem Zeitpunkt t3 von einem zweiten Wert R2 auf einen dritten Wert R3 entfällt bei dem veränderlichen Widerstand 51 der Figur 5. Statt dessen wird dort, wie erläutert wurde, der den zweiten Wert R2 realisierende Widerstand 52 gegebenenfalls variabel verändert.

Es wird darauf hingewiesen, dass der veränderliche Widerstand 51 der Figur 5 aber auch durch die Ausführungsform der Figur 4 realisiert werden kann. In diesem Fall kann in dem Zeitpunkt t3 von dem zweiten Wert R2 auf den dritten Wert R3 des veränderlichen Widerstands 51 der Figur 5 umgeschaltet werden.

Ebenfalls wird darauf hingewiesen, dass der in der Figur 5 dargestellte, aus dem Schalter 53 und dem Widerstand 52 bestehende veränderliche Widerstand 51 gegebenenfalls auch bei der Anlage 10 der Figur 1 anstelle des dortigen veränderlichen Widerstands 25 eingesetzt werden kann.

Weiterhin wird darauf hingewiesen, dass der veränderliche Widerstand 51 der Figur 5 auch zusätzlich zu dem veränderlichen Widerstand 25 in der Anlage 10 der Figur 1 zum Einsatz kommen kann. In diesem Fall kann somit die Drehzahl und/oder das Drehmoment und/oder die Ströme der Anlage 10 der Figur 1 über beide veränderlichen Widerstände 25, 51 beliebig beeinflusst werden.

In der Figur 6 ist eine elektrische Anlage 60 dargestellt, die zur Lieferung von Energie an ein dreipoliges, elektrisches Netz 11 geeignet ist. Die Anlage 60 kann beispielsweise im Rahmen eines Wasserkraftwerks oder eines Pumpspeicherwerks oder einer Windkraftanlage oder einer sonstigen Energieerzeugungseinrichtung vorhanden sein. Bei dem Netz 11 kann es sich beispielsweise um das allgemeine Energieversorgungsnetz handeln, über das Industrie und Haushalte mit elektrischer Energie versorgt werden.

Die Anlage 60 weist eine doppeltgespeiste Asynchronmaschine 13 mit einem Stator 14 und einem Rotor 15 auf. Der Rotor 15 kann, wie bereits angedeutet wurde, durch Wasserenergie oder Windenergie oder auf sonstige Weise angetrieben werden.

Der Stator 14 ist dreipolig über jeweils einen Statorschalter 17 mit dem Netz 11 verbunden. Im Normalbetrieb der Anlage 60 sind die Statorschalter 17 geschlossen.

Der Rotor 15 weist drei Wicklungen 18 auf, die sternförmig miteinander verbunden sind. Jeder der drei Wicklungen 18 ist ein Umrichter 21 zugeordnet. Der gemeinsame Anschlusspunkt 19 der drei Wicklungen 18 ist mit einem gemeinsamen Anschlusspunkt 22 der drei Umrichter 21 verbunden.

Die drei Umrichter 21 können insbesondere als Direktumrichter ausgebildet sein. Es ist aber auch möglich, dass Pulswechselrichter mit einem Gleichspannungszwischenkreis oder sogenannte I-Umrichter mit einem Stromzwischenkreis oder ähnliche Ausführungsformen von Umrichtern zur Anwendung kommen.

Die drei Umrichter 21 sind gleichartig ausgebildet. Nachfolgend wird nur einer der drei Umrichter 21 und dessen Verbindungen mit dem Rotor 15 der Asynchronmaschine 13 näher erläutert. Diese Beschreibung gilt entsprechend auch für die anderen beiden Umrichter 21.

Der freie Anschlusspunkt 24 jeder der drei Wicklungen 18 des Rotors 15 ist mit einem Anschlusspunkt 26 verbunden, an den einerseits der zugehörige Umrichter 21 angeschlossen ist. Andererseits ist dieser Anschlusspunkt 26 über einen Kurzschließer 28 mit dem gemeinsamen Anschlusspunkt 22 verbunden.

Der Umrichter 21 weist steuerbare Schalteinrichtungen 30 sowie Drosseln 31 auf, die in bekannter Weise miteinander verschaltet sind. Die Drosseln 31 sind dabei mit dem Anschlusspunkt 26 verbunden. In Abhängigkeit von der Ausführungsform der Umrichter 21 können die Drosseln 31 gegebenenfalls nicht vorhanden sein. Ebenfalls ist es in Abhängigkeit von der Ausgestaltung der Umrichter 21 möglich, dass deren Verbindung mit der Asynchronmaschine 13 andersartig ausgebildet ist.

Die Steuerung der Schalteinrichtungen 30 erfolgt ebenfalls in bekannter Weise über eine Schaltung 32, die über einen Schalter 33 mit dem Netz 11 gekoppelt ist. Im Normalbetrieb der Anlage 60 ist der Schalter 33 geschlossen.

Der Kurzschließer 28 besteht im vorliegenden Ausführungsbeispiel aus zwei gegensinnig geschalteten steuerbaren Schalteinrichtungen 35 und einem in Serie geschalteten Widerstand 36. Alternativ ist es möglich, dass der Kurzschließer 28 aus einer Diodenbrücke mit einem über z.B. einen Thyristor geschalteten Widerstand oder aus einer Thyristorbrücke mit einem zugehörigen Widerstand besteht. Andere Ausführungsformen des Kurzschließers 28 sind ebenfalls möglich. Wesentlich ist dabei, dass der Kurzschließer 28 für die Abschaltung eines Kurzschlusses des Rotors 15 über einen Widerstand geeignet ist.

Im Normalbetrieb der Anlage 60 ist der Kurzschließer 28 geöffnet, die Schalteinrichtungen 35 sind also in ihren nichtleitenden Zustand geschaltet.

Im Normalbetrieb der Anlage 60 fließen Rotorströme in Rotorstromkreisen, und zwar unter anderem über die Wicklungen 18. Weiterhin fließen Statorströme in Statorstromkreisen, und zwar unter anderem über die Statorschalter 17.

Hinsichtlich der Funktionsweise der Anlage 60 der Figur 6 wird davon ausgegangen, dass vor einem Zeitpunkt t0 ein Normalbetrieb der Anlage 60 vorliegt. Wie erläutert wurde, sind im Normalbetrieb insbesondere die Kurzschließer 28 geöffnet und die Schalteinrichtungen 30 der Umrichter 21 werden derart angesteuert, dass Energie in das Netz 11 eingespeist wird.

In dem Zeitpunkt t0 tritt ein einpoliger oder dreipoliger Kurzschluss im Netz 11 auf.

Dies hat zur Folge, dass die Kurzschließer 28 geschlossen werden und die Ansteuerung der Umrichter 21 gesperrt wird. Diese Maßnahmen erfolgen mit einer möglichst geringen Verzögerung nach dem Zeitpunkt t0. Durch diese Maßnahmen werden die Umrichter 21 vor Überspannungen und Überströmen geschützt. Unabhängig davon steigen die von der Asynchronmaschine 13 abgegebenen Rotorströme und Statorströme an.

Im Zeitpunkt des Kurzschlusses werden auch die Statorschalter 17 geöffnet. Da dies eine endliche Zeitdauer erfordert, sind die Statorschalter 17 in einem Zeitpunkt t1 offen.

Nunmehr wird gewartet, bis der Kurzschluss auf dem Netz 11 behoben ist. Bei einem einpoligen Kurzschluss muss zusätzlich die für die Automatische Wiedereinschaltung AWE erforderliche Zeitdauer abgewartet werden.

Nach Ablauf dieser Wartezeit werden in einem Zeitpunkt t2 die Kurzschließer 28 wieder geöffnet und die Schalteinrichtungen 30 der Umrichter 21 werden wieder angesteuert. Es wird damit begonnen, die Statorspannungen mit der Spannung des Netzes 11 zu synchronisieren. Dies kann gegebenenfalls mit Hilfe von Widerständen unterstützt werden, um auf diese Weise die Ausgleichsvorgänge bei größeren Abweichungen zwischen den Netz- und den Statorspannungen zu reduzieren. Die Widerstände können dabei insbesondere irgendwo in den Rotorstromkreis während der Synchrdnisierung zugeschaltet, und nach der Synchronisierung wieder überbrückt werden. Dadurch wird die für das Synchronisieren erforderliche Zeitdauer reduziert.

Sobald die Synchronisierung der Statorspannungen mit dem Netz 11 erreicht ist, werden die Statorschalter 17 wieder geschlossen. Damit ist der Normalbetrieb der Anlage 60 der Figur 6 wieder erreicht. Dort sind die Kurzschließer 28 geöffnet und die Schalteinrichtungen 30 der Umrichter 21 werden derart angesteuert, dass Energie in das Netz 11 eingespeist wird.

## Patentansprüche

1. Elektrische Anlage (10, 50) zur Abgabe von Energie an ein elektrisches Netz (11), mit einer doppeltgespeisten Asynchronmaschine (13), die mit einem Umrichter (21) gekoppelt ist, **dadurch gekennzeichnet, dass** ein Widerstand (25, 51) in dem Rotorstromkreis der Asynchronmaschine (13) vorgesehen ist, der vor einem Kurzschluss in dem Netz (11) einen ersten Wert (R1) aufweist, und der nach einem Kurzschluss in dem Netz (11) einen zweiten Wert (R2) aufweist.

2. Anlage (10, 50) nach Anspruch 1, wobei die Asynchronmaschine (13) einen Rotor (15) mit einer Wicklung (18) aufweist, **dadurch gekennzeichnet, dass** die Wicklung (18) über den Widerstand (25, 51) mit dem Umrichter (21) verbunden ist.

3. Anlage (10, 50) nach Anspruch 2, wobei der Umrichter (21) eine Drossel (31) aufweist, **dadurch gekennzeichnet, dass** die Wicklung (18) über den Widerstand (25, 51) mit der Drossel (31) verbunden ist.

4. Anlage (10, 50) nach einem der vorstehenden Ansprüche, **dadurch gekennzeichnet, dass** der Wert des Widerstands (25, 51) variabel veränderlich ist.

5. Anlage (10, 50) nach einem der vorstehenden Ansprüche, **dadurch gekennzeichnet, dass** der erste Wert (R1) des Widerstands (25, 51) etwa 0 Ohm und damit im wesentlichen einem Kurzschluss entspricht.

6. Anlage (10, 50) nach einem der vorstehenden Ansprüche, **dadurch gekennzeichnet, dass** der Widerstand (25, 51) nach dem Kurzschluss in dem Netz (11) zuerst den zweiten Wert (R2) und danach einen dritten Wert (R3) aufweist.

7. Anlage (10, 50) nach Anspruch 6, **dadurch gekennzeichnet, dass** der dritte Wert (R3) kleiner ist als der zweite Wert (R2).

8. Anlage (10, 50) nach einem der vorstehenden Ansprüche, **dadurch gekennzeichnet, dass** der Widerstand (25, 51) eine Parallelschaltung aus einem ersten Schalter (41, 53) und einem ersten Widerstand (42, 52) aufweist.

9. Anlage (10) nach Anspruch 8, **dadurch gekennzeichnet, dass** zu der Parallelschaltung eine Serienschaltung aus einem zweiten Schalter (43) und einem zweiten Widerstand (44) parallel geschaltet ist.

10. Anlage (10, 50) nach einem der vorstehenden Ansprüche, **dadurch gekennzeichnet, dass** ein Kurzschließer (28) vorgesehen ist, mit dem der Umrichter (21) kurzschließbar ist.

11. Anlage (10) nach Anspruch 10, **dadurch gekennzeichnet, dass** der Widerstand (25) zwischen dem Kurzschließer (28) und der Asynchronmaschine (13) angeordnet ist (Figur 1).

12. Anlage (50) nach Anspruch 10, **dadurch gekennzeichnet, dass** der Widerstand (51) zwischen dem Kurzschließer (28) und dem Umrichter (21) angeordnet ist (Figur 5).

13. Verfahren zum Betreiben einer elektrischen Anlage (10, 50) zur Abgabe von Energie an ein elektrisches Netz (11), wobei die Anlage (10, 50) eine doppeltgespeiste Asynchronmaschine (13) aufweist, die mit einem Umrichter (21) gekoppelt ist, **dadurch gekennzeichnet, dass** nach einem Kurzschluss in dem Netz (11) ein Widerstand (25, 51) in dem Rotorstromkreis der Asynchronmaschine (13) verändert wird.

14. Verfahren nach Anspruch 13, **dadurch gekennzeichnet, dass** der Widerstand (25, 51) von einem ersten Wert (R1) auf einen zweiten Wert (R2) geschaltet wird.

15. Verfahren nach einem der Ansprüche 13 oder 14, **dadurch gekennzeichnet, dass** der Widerstand nach dem Kurzschluss in dem Netz (11) von dem zweiten Wert (R2) als Funktion der Zeit auf einen dritten Wert (R3) verändert wird.

16. Verfahren nach einem der Ansprüche 13 bis 15, **dadurch gekennzeichnet, dass** nach dem Kurzschluss in dem Netz (11) der Umrichter (21) mittels eines Kurzschließers (28) kurzgeschlossen wird.

17. Verfahren nach Anspruch 16, **dadurch gekennzeichnet, dass** der Kurzschließer (28) wieder geöffnet wird, nachdem der Widerstand (25) den dritten Wert (R3) eingenommen hat.

18. Verfahren nach Anspruch 16, **dadurch gekennzeichnet, dass** der Kurzschließer (28) wieder geöffnet wird, nachdem der Widerstand (51) den zweiten Wert (52) eingenommen hat, und dass der Kurzschluss dann über den Umrichter (21) geführt wird.

19. Verfahren nach einem der Ansprüche 13 bis 18, **dadurch gekennzeichnet, dass** nach dem Kurzschluss in dem Netz (11) die Ansteuerung des Umrichters (21) gesperrt wird.

20. Verfahren nach einem der Ansprüche 13 bis 19, **dadurch gekennzeichnet, dass** der Widerstand (25, 51) auf den ersten Wert (R1) geschaltet wird, und die Ansteuerung des Umrichters (21) wieder aufgenommen wird.

21. Elektrische Anlage (60) zur Abgabe von Energie an ein elektrisches Netz (11), mit einer doppeltgespeisten Asynchronmaschine (13), die mit einem Umrichter (21) gekoppelt ist, **dadurch gekennzeichnet, dass** ein Statorschalter (17) in dem Statorstromkreis der Asynchronmaschine (13) vorgesehen ist, der nach einem Kurzschluss in dem Netz (11) geöffnet ist.

22. Anlage (60) nach Anspruch 21, **dadurch gekennzeichnet, dass** der Statorschalter (17) zwischen dem Stator (14) der Asynchronmaschine (13) und dem Netz (11) angeordnet ist.

23. Anlage (60) nach einem der Ansprüche 21 oder 22, **dadurch gekennzeichnet, dass** ein Widerstand vorgesehen ist, der während einer Synchronisierung der Statorspannung mit der Spannung des Netzes (11) zuschaltbar ist.

24. Verfahren zum Betreiben einer elektrischen Anlage (60) zur Abgabe von Energie an ein elektrisches Netz (11), wobei die Anlage (60) eine doppeltgespeiste Asynchronmaschine (13) aufweist, die mit einem Umrichter (21) gekoppelt ist, **dadurch gekennzeichnet, dass** nach einem Kurzschluss in dem Netz (11) ein Statorschalter (17) in dem Statorstromkreis der Asynchronmaschine (13) geöffnet wird.

25. Verfahren nach Anspruch 23, **dadurch gekennzeichnet, dass** nach einem Kurzschluss in dem Netz (11) die Ansteuerung des Umrichters (21) gesperrt und/oder ein Kurzschließer (28) geschlossen wird.

26. Verfahren nach Anspruch 24, **dadurch gekennzeichnet, dass** nach dem Beheben des Kurzschlusses auf dem Netz (11) die Ansteuerung des Umrichters (21) wieder begonnen und/oder der Kurzschließer (28) wieder geöffnet wird.

27. Verfahren nach Anspruch 25, **dadurch gekennzeichnet, dass** nach einer Synchronisierung der Statorspannung mit der Spannung des Netzes (11) der Statorschalter (17) wieder geschlossen wird.
